# FASCICULE DE BREVET EUROPEEN

(11) **EP 3 599 116 B1**
(45) Date de publication et mention de la délivrance du brevet: **30.06.2021**
(21) Numéro de dépôt: 19187827.1
(22) Date de dépôt: 23.07.2019
(51) Int. Cl.: B60G 15/06, F16C 33/76, F16C 33/78, F16C 19/10, F16C 33/74

(54) **BUTÉE DE SUSPENSION DE VÉHICULE AUTOMOBILE**
AUFHÄNGUNGSANSCHLAG EINES KRAFTFAHRZEUGS
MOTOR VEHICLE SUSPENSION BUFFER

(30) Priorité: 25.07.2018 FR 1856939
(43) Date de publication de la demande: 29.01.2020
(73) Titulaire: NTN-SNR ROULEMENTS, 74000 Annecy (FR)
(72) Inventeur: BONNAUDET, Aurélien, 74000 Annecy (FR)
(74) Mandataire: Sayettat, Julien Christian

(56) Documents cités:
- EP-A1- 1 870 265
- WO-A1-2011/120563
- WO-A1-2016/030638
- WO-A2-2009/019340
- FR-A1- 2 985 220

## Description

L'invention concerne une butée de suspension de véhicule automobile, notamment destinée à être intégrée dans une jambe de suspension télescopique d'une roue directrice de véhicule automobile.

L'invention s'applique à une butée de suspension comprenant une coupelle supérieure fixe destinée à être associée à la caisse du véhicule, une coupelle inférieure tournante comportant un appui pour le ressort de suspension, et des corps roulants disposés entre lesdites coupelles pour permettre leur rotation relative. En variante, les coupelles peuvent être montées en rotation relative de façon lisse, avec ou sans interposition d'une rondelle de friction entre elles.

En particulier, l'invention s'applique à une telle butée de suspension, dans laquelle les coupelles sont agencées pour former entre elles au moins une chambre annulaire dans laquelle un élément d'étanchéité est disposé, et ce pour empêcher d'une part les fuites du lubrifiant présent dans l'espace entre les coupelles, et d'autre part la contamination dudit espace avec des polluants extérieurs.

Pour ce faire, il est connu de prévoir des éléments d'étanchéité sous forme de couronnes annulaires qui sont montées dans des gorges annulaires formées à cet effet dans la chambre d'étanchéité.

Le document WO-2009/019340 propose un élément d'étanchéité qui est disposé dans la chambre d'étanchéité pour être en contact frottant sur chacune des coupelles et qui est monté mobile par rapport à au moins une coupelle. Ainsi, un compromis entre la fonction étanchéité et le couple induit est obtenu de façon particulièrement satisfaisante, et ce même en cas de déformation de la butée sous l'effet des efforts subis.

Toutefois, la butée de suspension peut être soumise à des projections de polluants extérieurs, par exemple des jets d'eau et/ou de boue, notamment lorsque le véhicule est utilisé par mauvais temps sur un terrain boueux et/ou couvert de flaques d'eau.

Dans ce cas, les polluants peuvent être projetés à grande vitesse contre l'élément d'étanchéité qui, étant mobile, peut se déplacer dans la chambre d'étanchéité en provoquant la rupture du contact frottant et l'entrée de polluants dans ladite chambre.

De telles projections sont notamment simulées lors des phases de test de la butée, par introduction d'un jet de liquide sous pression dans l'ouverture de la chambre d'étanchéité.

Le document WO2016/030638 A1 montre un autre exemple de butée de suspension connue.

L'invention vise à perfectionner l'art antérieur en proposant notamment une butée de suspension dans laquelle l'étanchéité est améliorée, notamment en protégeant la chambre contre l'introduction de tels jets de polluants.

A cet effet, l'invention propose une butée de suspension de véhicule automobile, ladite butée comprenant une coupelle supérieure et une coupelle inférieure qui sont montées en rotation relative autour d'un axe, lesdites coupelles étant agencées pour former entre elles au moins une chambre annulaire qui est délimitée latéralement par deux parois issues de respectivement une desdites coupelles, ladite chambre présentant une section externe formée entre une portée de respectivement une paroi, ladite butée de suspension comprenant un élément d'étanchéité externe qui présente deux portées complémentaires, ledit élément d'étanchéité externe étant monté mobile dans la section externe entre une position stable dans laquelle lesdites portées complémentaires sont disposées à distance des portées de ladite section externe et une position contrainte par appui sur ledit élément d'étanchéité externe dans laquelle lesdites portées complémentaires sont plaquées sur respectivement une desdites portées pour assurer à leur interface l'étanchéité de la section externe.

D'autres particularités et avantages de l'invention apparaîtront dans la description qui suit, faite en référence aux figures jointes, dans lesquelles :
- la figure 1 représente en coupe axiale une butée de suspension selon un mode de réalisation de l'invention, la figure 1a étant une vue partielle agrandie de la figure 1 centrée sur le côté droit de la chambre d'étanchéité, et la figure 1b étant une vue partielle agrandie de la figure 1a, qui montre plus particulièrement la section externe de ladite chambre d'étanchéité ;
- la figure 2 est une vue analogue à la figure 1a pour une butée de suspension selon un autre mode de réalisation de l'invention ;
- la figure 3a est une vue analogue aux figures 1a et 2 pour une butée de suspension selon un autre mode de réalisation de l'invention, la figure 3b étant une vue partielle agrandie de la zone B de la figure 3a, semblable à la figure 1b.

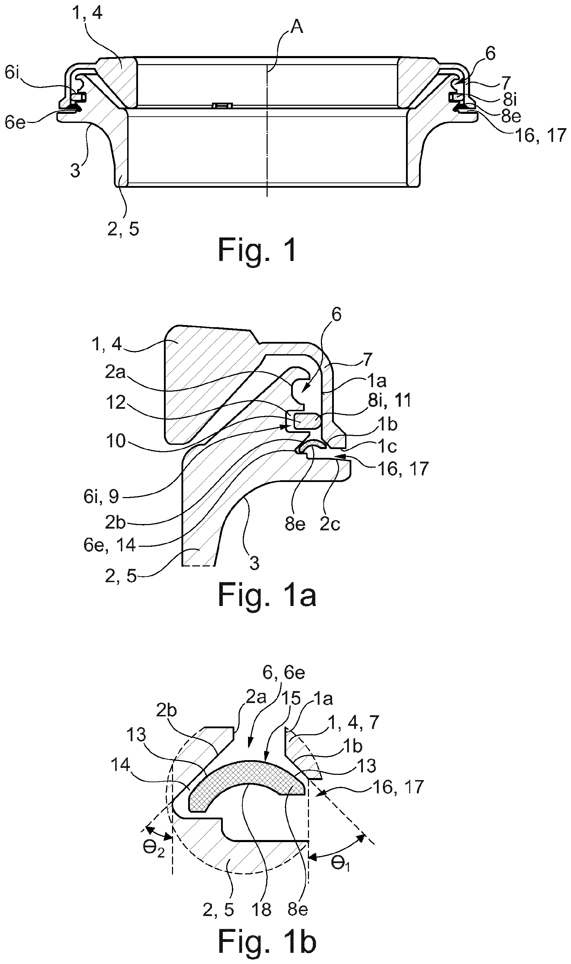

Dans cette description, les termes de positionnement dans l'espace sont pris en référence à l'axe de rotation A de la butée de suspension (vertical sur la figure 1). En particulier, le terme « intérieur » est relatif à une disposition proche de cet axe A et le terme « extérieur » est relatif à une disposition à distance de cet axe A. Par ailleurs, les termes « supérieur » et « inférieur » sont relatifs à la disposition de la butée telle que représentée sur les figures, et les termes « interne » et « externe » sont relatifs à une disposition par rapport à l'intérieur de la butée.

Une roue d'un véhicule automobile, notamment une roue directrice, est montée sur le châssis par l'intermédiaire d'une jambe de force qui permet la suspension de la caisse relativement au sol. A cet effet, la jambe de force comprend classiquement un amortisseur, un ressort de suspension ainsi qu'une butée de suspension sur laquelle le ressort vient en appui directement ou indirectement.

En relation avec les figures, on décrit ci-dessous une butée de suspension qui comprend une coupelle supérieure fixe 1 destinée à être associée à la caisse du véhicule notamment via un bloc filtrant, et une coupelle inférieure tournante 2 comportant un appui 3 pour le ressort de suspension, lesdites coupelles étant montées en rotation relative autour d'un axe A. Ainsi, lorsque le ressort est sollicité en compression et en détente, l'enroulement des spires de ce dernier sur elles-mêmes est modifié, ce qui entraîne la rotation de la coupelle inférieure 2.

En outre, le braquage des roues induit également une rotation de la coupelle inférieure 2.

De façon connue, une butée de suspension peut comprendre des corps roulants qui sont disposés entre les coupelles pour permettre leur rotation relative autour de l'axe A. Pour ce faire, les coupelles supérieure 1 et inférieure 2 peuvent comprendre chacune une rondelle, notamment réalisée en tôle emboutie, qui est pourvue d'une piste de roulement respectivement inférieure et supérieure pour les corps roulants. En variante, les coupelles 1, 2 peuvent être montées en rotation relative de façon lisse, avec ou sans interposition d'une rondelle de friction entre elles.

La butée comprend en outre deux pièces d'habillage, notamment réalisées par moulage d'un matériau thermoplastique rigide, par exemple de type polyamide 6.6. Ces pièces sont respectivement un couvercle 4 associé sur la rondelle supérieure pour être interposé entre le châssis et ladite rondelle supérieure, et un support 5 associé sous la rondelle inférieure, ledit support comprenant l'appui ressort 3. Ces pièces d'habillage 4, 5 permettent notamment une reprise des efforts du ressort et éventuellement de ceux de la butée de choc.

Les coupelles 1, 2 sont agencées pour former entre elles au moins une chambre annulaire 6 qui est délimitée latéralement par deux parois 1a, 2a issues de respectivement une desdites coupelles.

Dans les modes de réalisation représentés, le couvercle 4 comprend une jupe annulaire extérieure 7 sur laquelle s'étend une paroi axiale extérieure 1a, le support 5 présentant une paroi axiale extérieure 2a délimitant une chambre annulaire d'étanchéité 6 avec la paroi axiale extérieure 1a de ladite jupe.

En particulier, la chambre annulaire 6 présente un jeu radial de sorte à permettre la rotation de la coupelle inférieure 2 par rapport à la coupelle supérieure 1 sans interférence entre ceux-ci.

Pour empêcher d'une part les fuites du lubrifiant présent dans l'espace entre les coupelles 1, 2, et d'autre part la contamination dudit espace avec des polluants extérieurs, au moins un élément d'étanchéité 8i, 8e est disposé dans la chambre annulaire 6.

Selon une réalisation, la chambre 6 peut contenir une substance visqueuse pour améliorer l'étanchéité conférée par l'élément d'étanchéité 8i, 8e. En particulier, la substance peut également présenter une fonction de lubrification relativement aux déplacements de l'élément d'étanchéité 8i, 8e dans la chambre 6.

Sur les figures, la chambre 6 présente une section interne 6i équipée d'un élément d'étanchéité interne 8i qui est disposé entre les parois 1a, 2a des coupelles 1, 2.

De façon avantageuse, l'élément d'étanchéité interne 8i est monté mobile par rapport à chacune des coupelles 1, 2, ce qui permet d'obtenir un compromis particulièrement satisfaisant entre la fonction étanchéité et le couple induit, et ce même en cas de déformation de la butée sous l'effet des efforts subis.

Selon une autre réalisation, l'élément d'étanchéité interne 8i peut être en contact frottant par rapport à une coupelle 1, 2, afin d'améliorer la fonction étanchéité de l'élément 8i, 8e.

L'une des parois axiales 1a, 2a présente une gorge annulaire 9 dans laquelle une couronne 10 de l'élément d'étanchéité interne 8i est disposée, ledit élément d'étanchéité interne présentant un segment 11 d'interférence avec l'autre paroi 1a, 2a.

Dans les modes de réalisation représentés, la gorge annulaire 9 est formée dans la paroi axiale 2a de la coupelle inférieure 2. En variante, la gorge 9 peut être formée sur la paroi axiale 1a de la coupelle supérieure 1.

La couronne 10 forme un jeu 12 axial et/ou radial avec la gorge 9, afin de permettre un déplacement libre de ladite couronne dans ladite gorge. Pour ce faire, la couronne 10 peut notamment présenter une géométrie complémentaire à celle de la gorge 9 avec une dimension radiale et/ou axiale réduite.

Dans les modes de réalisation représentés, la couronne 10 forme avec la gorge 9 un jeu 12 qui s'étend en U à l'interface entre ladite couronne et ladite gorge, formant ainsi une chicane d'étanchéité.

La gorge 9 et la couronne 10 présentent respectivement une profondeur et une longueur radiales suffisamment importantes pour garantir une bonne efficacité de la chicane d'étanchéité. En outre, le segment d'interférence 11 est en appui radial sur la paroi axiale 1a de la coupelle extérieure 1.

Lorsque le véhicule est utilisé par mauvais temps sur un terrain boueux et/ou couvert de flaques d'eau, des jets d'eau et/ou de boue peuvent être projetés à grande vitesse contre l'élément d'étanchéité 8i qui, du fait de sa mobilité, peut se déplacer dans la chambre d'étanchéité 6 en provoquant la rupture du contact frottant, de sorte que ces polluants peuvent alors entrer dans ladite chambre.

Pour protéger l'élément d'étanchéité 8i contre de telles projections de polluants extérieurs, la chambre d'étanchéité 6 présente une section externe 6e formée entre une portée 1b, 2b de respectivement une paroi 1a, 2a, et dans laquelle est disposé un élément d'étanchéité externe 8e.

Dans les modes de réalisation représentés, les éléments d'étanchéité 8i, 8e présentent tous deux une géométrie annulaire. Par ailleurs, les éléments d'étanchéité 8i, 8e sont notamment réalisés en matériau thermoplastique rigide, par exemple en polyoxyméthylène, en polyéthylène, en polypropylène, en polyamide 6, 6.6, 11 ou 12.

L'élément d'étanchéité externe 8e présente une face d'étanchéité 15 sur laquelle sont formées deux portées complémentaires 13, et est monté mobile dans la section externe 6e entre une position stable, dans laquelle les portées complémentaires 13 sont disposées à distance des portées 1b, 2b, et une position contrainte par appui sur ledit élément d'étanchéité externe 8e, notamment d'un jet de polluants extérieurs, dans laquelle les portées complémentaires 13 sont plaquées sur respectivement une des portées 1b, 2b pour assurer à leur interface l'étanchéité de la section externe 6e.

Ainsi, comme représenté sur les figures, en l'absence de projections de polluants extérieurs, l'élément d'étanchéité externe 8e n'est en contact qu'avec une des coupelles 1, 2, de sorte à ne pas induire de couple de frottement supplémentaire pour la butée. En outre, l'élément d'étanchéité 8e en position stable forme une chicane d'étanchéité supplémentaire dans la chambre 6, ce qui améliore d'autant l'étanchéité de ladite chambre.

Lorsqu'une projection de polluant extérieur vient en contact contre l'élément d'étanchéité externe 8e, ledit élément est déplacé en position contrainte pour réaliser un contact étanche et former un barrage à ladite projection de polluant extérieur.

Par ailleurs, après la projection de polluant, l'élément 8e n'est plus contraint et revient donc en position stable, ce qui permet de rompre le contact étanche entre les portées 1a, 2a et les portées complémentaires 13, et ainsi de ne pas induire de couple de frottement entre deux projections. En outre, en cas de passage de polluants au-delà de la section externe 6e, le retour dudit élément en position stable permet l'écoulement de ces éventuels polluants hors de la chambre 6.

Dans les modes de réalisation représentés, la section externe 6e est orientée vers le bas, l'élément d'étanchéité 8e étant soulevé en position contrainte. Ainsi, le retour de l'élément d'étanchéité 8e en position stable se fait par gravité.

Au moins une portée 1b, 2b est bordée par un logement 14 dans lequel l'élément d'étanchéité 8e est retenu en position stable dans la section externe 6e, afin d'assurer le centrage dudit élément dans ladite section tout en limitant ses déplacements. Sur les figures, le logement 14 est formé sur la paroi axiale 2a de la coupelle inférieure 2 de manière à s'étendre sous la portée 2b. En outre, l'autre portée 1b est formée sur l'extrémité libre de la jupe 7.

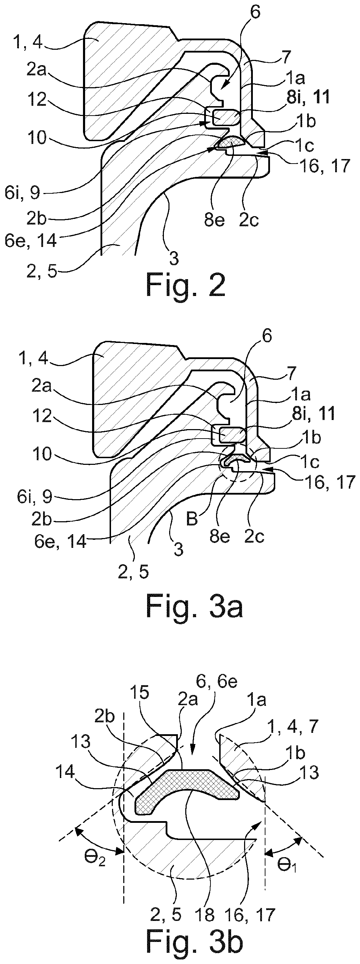

En relation avec les figures 1b et 3b, les portées 1b, 2b sont inclinées par rapport à l'axe de rotation A d'un angle respectivement θ₁ et θ₂. De façon avantageuse, les angles θ₁ et θ₂ sont sensiblement tels que θ₁= - θ₂, ce qui permet d'assurer une symétrie entre les appuis respectifs des parois complémentaires 13 sur chacune des portées 1b, 2b.

L'un parmi les portées 1b, 2b et les portées complémentaires 13 sont sensiblement planes, l'autre parmi les portées 1b, 2b et les portées complémentaires 13 étant courbes. Ainsi, lorsque l'élément 8e est en position contrainte, l'étanchéité est assurée par plaquage d'une surface torique contre une surface tronconique. En particulier, l'élément 8e peut être légèrement déformable pour permettre un débattement au niveau du plaquage entre les portées 1b, 2b et les parois complémentaires 13.

Sur les figures 1, 1a, 1b et 2, les portées 1b, 2b sont sensiblement planes, les portées complémentaires 13 étant courbes. En particulier, la face d'étanchéité 15 présentant une géométrie convexe pour former de part et d'autre des portées complémentaires 13 courbes.

Sur les figures 3a et 3b, les portées 1b, 2b sont courbes, et les portées complémentaires 13 sont sensiblement planes.

La section externe 6e présente une ouverture 16 qui est formée entre deux parois 1c, 2c de respectivement une coupelle 1, 2. En particulier, les parois 1c, 2c forment entre elles un jeu réduit 17 de chicanage de l'ouverture 16, afin de former un barrage destiné à diminuer la vitesse et/ou la puissance d'une projection de polluant entrant par ladite ouverture.

Les parois 1c, 2c s'étendent sensiblement radialement pour former un jeu axial qui entoure l'élément d'étanchéité externe 6e. En outre, l'élément d'étanchéité externe 8e présente une face d'appui 18 opposée à la face d'étanchéité 15 et en regard de laquelle l'ouverture 16 débouche intérieurement. De façon préférentielle, l'ouverture 16 se situe axialement en dessous de l'élément d'étanchéité externe 8e.

Ainsi, lorsqu'une projection de polluant extérieur entre par l'ouverture 16, l'agencement du jeu 17 permet de diriger ladite projection sur la face d'appui 18, afin de concentrer la pression sur ladite face, et ainsi permettre une mise en place correcte de l'élément 8e dans sa position de contrainte.

De façon avantageuse, comme représenté sur les figures 1, 1a, 1b, 3a et 3b, la face d'appui 18 présente une géométrie concave, ce qui permet d'améliorer le guidage sur elle des projections de polluants.

## Revendications

1. Butée de suspension de véhicule automobile, ladite butée comprenant une coupelle supérieure (1) et une coupelle inférieure (2) qui sont montées en rotation relative autour d'un axe (A), lesdites coupelles étant agencées pour former entre elles au moins une chambre annulaire (6) qui est délimitée latéralement par deux parois (1a, 2a) issues de respectivement une desdites coupelles, ladite chambre présentant une section externe (6e) formée entre une portée (1b, 2b) de respectivement une paroi (1a, 2a), ladite butée de suspension étant **caractérisée en ce qu'**elle comprend un élément d'étanchéité externe (8e) qui présente deux portées complémentaires (13), ledit élément d'étanchéité externe étant monté mobile dans la section externe (6e) entre une position stable dans laquelle lesdites portées complémentaires sont disposées à distance des portées (1b, 2b) de ladite section externe et une position contrainte par appui sur ledit élément d'étanchéité externe dans laquelle lesdites portées complémentaires sont plaquées sur respectivement une desdites portées pour assurer à leur interface l'étanchéité de la section externe (6e).

2. Butée de suspension selon la revendication 1, **caractérisée en ce que** la section externe (6e) est orientée vers le bas, l'élément d'étanchéité externe (8e) étant soulevé en position contrainte.

3. Butée de suspension selon l'une des revendications 1 ou 2, **caractérisée en ce que** les portées (1b, 2b) sont inclinées par rapport à l'axe (A) de rotation d'un angle respectivement θ₁ et θ₂.

4. Butée de suspension selon la revendication 3, **caractérisée en ce que** les angles θ₁ et θ₂ sont sensiblement tels que : θ₁ = -θ₂.

5. Butée de suspension selon l'une quelconque des revendications 1 à 4, **caractérisée en ce que** l'un parmi les portées (1b, 2b) et les portées complémentaires (13) sont sensiblement planes, l'autre parmi les portées (1b, 2b) et les portées complémentaires (13) étant courbes.

6. Butée de suspension selon l'une quelconque des revendications 1 à 5, **caractérisée en ce qu'**au moins une portée (2b) est bordée par un logement (14) dans lequel l'élément d'étanchéité externe (8e) est retenu en position stable dans la section externe (6e).

7. Butée de suspension selon l'une quelconque des revendications 1 à 6, **caractérisée en ce que** l'élément d'étanchéité externe (8e) présente une face d'étanchéité (15) sur laquelle les portées complémentaires (13) sont formées.

8. Butée de suspension selon la revendication 7, **caractérisée en ce que** la face d'étanchéité (15) présente une géométrie convexe formant de part et d'autre des portées complémentaires courbes (13).

9. Butée de suspension selon l'une des revendications 7 ou 8, **caractérisée en ce que** l'élément d'étanchéité externe (8e) présente une face d'appui (18) qui est opposée à la face d'étanchéité (15).

10. Butée de suspension selon la revendication 9, **caractérisée en ce que** la face d'appui (18) présente une géométrie concave.

11. Butée de suspension selon l'une quelconque des revendications 1 à 10, **caractérisée en ce que** la section externe (6e) présente une ouverture (16) qui est formée entre deux parois (1c, 2c) de respectivement une coupelle (1, 2), lesdites parois formant entre elles un jeu réduit (17) de chicanage de ladite ouverture.

12. Butée de suspension selon la revendication 11, **caractérisée en ce que** les parois (1c, 2c) s'étendent sensiblement radialement pour former un jeu axial (17) qui entoure l'élément d'étanchéité externe (8e).

13. Butée de suspension selon l'une des revendications 11 ou 12, **caractérisée en ce que** l'ouverture (16) se situe axialement en dessous de l'élément d'étanchéité externe (8e).

14. Butée de suspension selon l'une quelconque des revendications 1 à 13, **caractérisée en ce que** la chambre (6) présente une section interne (6i) équipée d'un élément d'étanchéité interne (8i) qui est disposé entre les parois (1a, 2a) des coupelles (1, 2).

15. Butée de suspension selon la revendication 14, **caractérisée en ce qu'**une paroi (2a) présente une gorge annulaire (9) dans laquelle une couronne (10) de l'élément d'étanchéité interne (6i) est disposée, ledit élément d'étanchéité interne présentant un segment (11) d'interférence avec l'autre paroi (1a).

16. Butée de suspension selon la revendication 15, **caractérisée** en ce la couronne (10) forme un jeu (12) axial et/ou radial avec la gorge (9) pour permettre un déplacement de ladite couronne dans ladite gorge.

17. Butée de suspension selon l'une quelconque des revendications 1 à 16, **caractérisée en ce que** l'élément d'étanchéité externe (8e) et l'éventuel élément d'étanchéité interne (8i) sont réalisés en matériau thermoplastique rigide.

## Patentansprüche

1. Aufhängungsanschlag eines Kraftfahrzeugs, wobei der Anschlag einen oberen Teller (1) und einen unteren Teller (2) umfasst, die rotatorisch relativ um eine Achse (A) angebracht sind, wobei die Teller derart eingerichtet sind, dass sie zwischen sich mindestens eine ringförmige Kammer (6) bilden, die seitlich von zwei Wänden (1a, 2a) begrenzt ist, die aus jeweils einem der Teller hervorgehen, wobei die Kammer einen äußeren Bereich (6e) aufweist, der zwischen einem Sitz (1b, 2b) jeweils einer Wand (1a, 2a) gebildet ist, wobei der Aufhängungsanschlag **dadurch gekennzeichnet ist, dass** er ein äußeres Dichtelement (8e) aufweist, das zwei komplementäre Sitze (13) aufweist, wobei das äußere Dichtelement im äußeren Bereich (6e) zwischen einer stabilen Position, in welcher die komplementären Sitze von den Sitzen (1b, 2b) des äußeren Bereichs entfernt sind, und einer durch Abstützung auf dem äußeren Dichtelement gespannten Position, in welcher die komplementären Sitze auf jeweils einem Sitz angedrückt sind, um an deren Schnittstelle die Abdichtung des äußeren Bereichs (6e) zu sichern, beweglich angebracht ist.

2. Aufhängungsanschlag nach Anspruch 1, **dadurch gekennzeichnet, dass** der äußere Bereich (6e) nach unten zeigt, wobei das äußere Dichtelement (8e) in der gespannten Position angehoben ist.

3. Aufhängungsanschlag nach einem der Ansprüche 1 oder 2, **dadurch gekennzeichnet, dass** die Sitze (1b, 2b) in Bezug auf die Rotationsachse (A) in einem Winkel von jeweils θ₁ und θ₂ geneigt sind.

4. Aufhängungsanschlag nach Anspruch 3, **dadurch gekennzeichnet, dass** die Winkel θ₁ und θ₂ etwa derart sind: θ₁ = - θ₂.

5. Aufhängungsanschlag nach einem der Ansprüche 1 bis 4, **dadurch gekennzeichnet, dass** einer von den Sitzen (1b, 2b) und den komplementären Sitzen (13) etwa eben ist, wobei der andere von den Sitzen (1b, 2b) und den komplementären Sitzen (13) gekrümmt ist.

6. Aufhängungsanschlag nach einem der Ansprüche 1 bis 5, **dadurch gekennzeichnet, dass** mindestens ein Sitz (2b) von einer Aufnahme (14) gesäumt ist, in der das äußere Dichtelement (8e) in stabiler Position im äußeren Bereich (6e) gehalten wird.

7. Aufhängungsanschlag nach einem der Ansprüche 1 bis 6, **dadurch gekennzeichnet, dass** das äußere Dichtelement (8e) eine Dichtungsfläche (15) aufweist, auf der die komplementären Sitze (13) gebildet sind.

8. Aufhängungsanschlag nach Anspruch 7, **dadurch gekennzeichnet, dass** die Dichtungsfläche (15) eine konvexe Geometrie aufweist, die beiderseits gekrümmte komplementäre Sitze (13) bildet.

9. Aufhängungsanschlag nach einem der Ansprüche 7 oder 8, **dadurch gekennzeichnet, dass** das äußere Dichtelement (8e) eine Stützfläche (18) gegenüber der Dichtungsfläche (15) aufweist.

10. Aufhängungsanschlag nach Anspruch 9, **dadurch gekennzeichnet, dass** die Stützfläche (18) eine konkave Geometrie aufweist.

11. Aufhängungsanschlag nach einem der Ansprüche 1 bis 10, **dadurch gekennzeichnet, dass** der äußere Bereich (6e) eine Öffnung (16) aufweist, die zwischen zwei Wänden (1c, 2c) von jeweils einem Teller (1, 2) gebildet ist, wobei die Wände zwischen sich ein reduziertes Sperrspiel (17) der Öffnung bilden.

12. Aufhängungsanschlag nach Anspruch 11, **dadurch gekennzeichnet, dass** sich die Wände (1c, 2c) etwa radial erstrecken, um ein axiales Spiel (17) zu bilden, welches das äußere Dichtelement (8e) umgibt.

13. Aufhängungsanschlag nach einem der Ansprüche 11 oder 12, **dadurch gekennzeichnet, dass** sich die Öffnung (16) axial unterhalb des äußeren Dichtelements (8e) befindet.

14. Aufhängungsanschlag nach einem der Ansprüche 1 bis 13, **dadurch gekennzeichnet, dass** die Kammer (6) einen inneren Bereich (6i) aufweist, der mit einem inneren Dichtelement (8i) ausgestattet ist, das zwischen den Wänden (1a, 2a) der Teller (1, 2) angeordnet ist.

15. Aufhängungsanschlag nach Anspruch 14, **dadurch gekennzeichnet, dass** eine Wand (2a) eine ringförmige Nut (9) aufweist, in der ein Kranz (10) des inneren Dichtelements (6i) angeordnet ist, wobei das innere Dichtelement ein Interferenzsegment (11) mit der anderen Wand (1a) aufweist.

16. Aufhängungsanschlag nach Anspruch 15, **dadurch gekennzeichnet, dass** der Kranz (10) ein axiales und/oder radiales Spiel (12) mit der Nut (9) bildet, um eine Verlagerung des Kranzes in der Nut zu erlauben.

17. Aufhängungsanschlag nach einem der Ansprüche 1 bis 16, **dadurch gekennzeichnet, dass** das äußere Dichtelement (8e) und das eventuelle innere Dichtelement (8i) aus starrem thermoplastischem Material hergestellt sind.

## Claims

1. Suspension stop of a motor vehicle, said suspension stop comprising an upper cup (1) and a lower cup (2) which are mounted in relative rotation about an axis (A), said cups being arranged to form between them at least one annular chamber (6) which is delimited laterally by two walls (1a, 2a) from one of said cups respectively, said chamber having an external section (6e) formed between a bearing surface (1b, 2b) of one wall (1a, 2a) respectively, said suspension stop being **characterised in that** it comprises an external sealing element (8e) which has two complementary bearing surfaces (13), said external sealing element being mounted to be mobile in the external section (6e) between a stable position in which said complementary bearing surfaces are arranged at a distance from the bearing surfaces (1b, 2b) of said external section and a stressed position by bearing on said external sealing element in which said complementary bearing surfaces are forced against respectively one of said bearing surfaces to ensure the sealing of the external section (6e) at the interface thereof.

2. Suspension stop according to claim 1, **characterised in that** the external section (6e) is oriented downwards, the external sealing element (8e) being raised in a stressed position.

3. Suspension stop according to any of claims 1 or 2, **characterised in that** the bearing surfaces (1b, 2b) are inclined relative to the axis (A) of rotation by an angle respectively θ₁ and θ₂.

4. Suspension stop according to claim 3, **characterised in that** the angles θ₁ and θ₂ are substantially such that: θ₁ = -θ₂.

5. Suspension stop according to any of claims 1 to 4, **characterised in that** one among the bearing surfaces (1b, 2b) and the complementary bearing surfaces (13) are substantially planar, the other among the bearing surfaces (1b, 2b) and the complementary bearing surfaces (13) being curved.

6. Suspension stop according to any of claims 1 to 5, **characterised in that** at least one bearing surface (2b) is bordered by a housing (14) in which the external sealing element (8e) is held in a stable position in the external section (6e).

7. Suspension stop according to any of claims 1 to 6, **characterised in that** the external sealing element (8e) has a sealing face (15) on which the complementary bearing surfaces (13) are formed.

8. Suspension stop according to claim 7, **characterised in that** the sealing face (15) has a convex geometry forming curved complementary bearing surfaces (13) on either side.

9. Suspension stop according to any of claims 7 or 8, **characterised in that** the external sealing element (8e) has a support face (18) which is opposite to the sealing face (15).

10. Suspension stop according to claim 9, **characterised in that** the support face (18) has a concave geometry.

11. Suspension stop according to any of claims 1 to 10, **characterised in that** the external section (6e) has an opening (16) which is formed between two walls (1c, 2c) of respectively a cup (1, 2), said walls forming between them a reduced baffle clearance (17) of said opening.

12. Suspension stop according to claim 11, **characterised in that** the walls (1c, 2c) extend substantially radially to form an axial clearance (17) which surrounds the external sealing element (8e).

13. Suspension stop according to any of claims 11 or 12, **characterised in that** the opening (16) is located axially below the external sealing element (8e).

14. Suspension stop according to any of claims 1 to 13, **characterised in that** the chamber (6) has an internal section (6i) provided with an internal sealing element (8i) which is arranged between the walls (1a, 2a) of the cups (1, 2).

15. Suspension stop according to claim 14, **characterised in that** a wall (2a) has an annular groove (9) in which a crown (10) of the internal sealing element (6i) is arranged, said internal sealing element having a segment (11) for interacting with the other wall (1a).

16. Suspension stop according to claim 15, **characterised in that** the crown (10) forms an axial and/or radial clearance (12) with the groove (9) to enable the displacement of said crown in said groove.

17. Suspension stop according to any of claims 1 to 16, **characterised in that** the external sealing element (8e) and the possible internal sealing element (8i) are made from a rigid thermoplastic material.
